# EUROPEAN PATENT APPLICATION

(11) **EP 4 290 474 A1**
(43) Date of publication of application: **13.12.2023**
(21) Application number: 23172041.8
(22) Date of filing: 08.05.2023
(51) Int. Cl.: G06V 20/58, G06V 10/82, G06V 10/774, G06V 10/62, G06V 10/94, G06V 20/54

(54) **COMPUTER-IMPLEMENTED METHOD OF TRAINING A NEURAL NETWORK TO SELECT OBJECTS, AND A VEHICLE, CLOUD SERVER, AND TRAFFIC INFRASTRUCTURE UNIT**

(30) Priority: 09.06.2022 GB 202208488
(71) Applicant: Aptiv Technologies Limited, 14004 St. Michael (BB)
(72) Inventor: Komorkiewicz, Mateusz, 30-798 Kraków (PL); Szelest, Marcin, 31-232 Kraków (PL)
(74) Representative: Hoffmann Eitle

(57) **Abstract**

Provided is a computer-implemented method of training a neural network to select objects in a vicinity of a target vehicle, comprising: aggregating (S110) sensor data related to the plurality of vehicles; filtering (S130) the sensor data according to one or more conditions, said conditions identifying an action of an ADAS/AD system of at least one of the plurality of vehicles; identifying (S150) one or more objects in the vicinity of target vehicle based on the filtered sensor data; and using (S170) the identified one or more objects to train the neural network to determine potential objects that cause a triggering of an ADAS/AD system of another vehicle.

## Description

### Technical Field

Example aspects herein generally relate to a computer-implemented method of training a neural network to select objects in a vicinity of a target vehicle, as well as a vehicle, cloud server, and traffic infrastructure unit employing the trained neural network for a more efficient usage of the vehicular communication network, as well as corresponding computer programs and computer-readable mediums.

### Background

Autonomous driving functionality and, more generally, advanced driver-assistance system (ADAS) functionality are features of modern vehicles which have been attracting increasing interest. ADAS functionality may assist a driver in controlling a vehicle by assisting with driving, parking and/or other functions of the vehicle. As a specific aspect of ADAS functionality, autonomous driving (AD) functionality may allow the driver of a host vehicle (i.e. the vehicle to be controlled) to hand over the control of both acceleration and steering of the vehicle to an autonomous driving system, which may be provided with, for example, a target velocity and headway time or more detailed information so as to follow an intended route.

An ADAS may be adapted to react appropriately to other road-users, pedestrians, possible obstacles (e.g. a collision) and/or environmental conditions (e.g. heavy rain or snow). Accordingly, ADASs are generally configured to obtain information from equipment such as radars, sensors, cameras, inertial measurement units etc., in order to collect data about the vehicle and its environment and generate a high-level environment model describing the road on which the vehicle is travelling and the traffic on it.

Vehicle-to-vehicle (V2V), Vehicle-to-infrastructure (V2I), Car-to-cloud (C2C), or more general Vehicle-to-Everything (V2X) technologies that enable the vehicles to be connected are entering the automotive market in production volumes. For example, V2V allows vehicles to be linked to one another (and the cloud, toward an Internet of Everything), and a vehicle may communicate (e.g. using dual-band IP radio via secure mesh networks or the like) to other vehicles regarding an accident, a traffic slowdown or other hazardous situations. The thus informed vehicles may, for example, alert drivers and/or the vehicles may slow down autonomously. As such, the connected vehicles are not limited to what can be individually detected (e.g. by radars, sensors, cameras). This increases the awareness of real-time driving conditions since these technologies are not limited to a line of sight of individual sensors of the vehicle.

On the other hand, there are still open questions and problems that need to be solved to enable usage of these V2X technologies on a mass scale. Besides from the very important radio communication and cybersecurity issues, one of the main question is what data should be shared between vehicles. The answer to this question directly affects two important technical questions, the bandwidth that will be needed to exchange the data and the usefulness of transmitted information to other vehicles, for example in making ADAS-type decisions.

With the advance of ADAS/AD technology current vehicle perception systems are able to detect objects like pedestrians or other vehicles in full 360 degrees around the vehicle in a range often extending ±80m. This means that in a crowded city every vehicle can easily detect more than 100 objects. If all vehicles within the communicating range were trying to broadcast all detections to all other vehicles it will be very problematic, as a large bandwidth would be required to exchange the amount of data. For example, a vehicle may easily receive thousands of messages per second or receive messages from hundreds of other vehicles in a crowded urban environment.

With the introduction of 5G network and beyond the bottleneck of data bandwidth between vehicles may be addressed. In practical terms, however, there is always more information than can be uploaded with a given radio bandwidth and/or that can be processed by other vehicles in real time.

There is thus a need to overcome the technical limitations of data communication of vehicular communications in the prior art.

### Summary

The subject-matter of the independent claims solves the above-identified technical problems. The dependent claims describe further preferred embodiments.

There is disclosed herein, in accordance with embodiments of a first aspect of the present disclosure a computer-implemented method of training a neural network to select objects in a vicinity of a target vehicle. The method comprises aggregating sensor data related to the plurality of vehicles. The method further comprises filtering the sensor data according to one or more conditions, said conditions identifying an action of an ADAS/AD system of at least one of the plurality of vehicles. The method further comprises identifying one or more objects in the vicinity of target vehicle based on the filtered sensor data and using the identified one or more objects to train the neural network to determine potential objects that cause a triggering of an ADAS/AD system of another vehicle.

Identifying the one or more objects in the vicinity of target vehicle may further include identifying of a plurality of positions of the one or more objects.

Identifying the one or more objects in the vicinity of target vehicle may further include identifying a plurality of velocities and/or accelerations of the one or more objects.

The method according to the first aspect may further use the plurality of positions and/or the plurality of velocities and/or accelerations to train the neural network.

The method according to the first aspect may further comprise tracing the identified one or more objects back to previous sensor readings to track the one or more objects over a plurality of time steps.

According to the method according to the first aspect the one or more conditions identifying an action may be one or more of: detection of a vehicle swarm anomaly; detection of a discrepancy with a traffic prediction; detection that a vehicle control unit rises a flag; detection that a path planning algorithm needs to correct its course due to an object that was not earlier seen by the perception system of the vehicle; detection that the ADAS/AD system of the vehicle disengages and asks the driver for intervention; detection of a rapid change of direction of a detected object; detection of a collision or detection that a corrective action is performed to avoid a collision; and/or detection that a high-risk participant is identified.

According to the method according to the first aspect the aggregated sensor data may be synchronized sensor data.

According to the method according to the first aspect the aggregated sensor data may be from a plurality of vehicles recording sensor data simultaneously or are from a virtual world simulation of a plurality of vehicles.

According to the method according to the first aspect the trained neural network may be a neural network trained for a specific traffic scene.

According to the method according to the first aspect the output of the trained neural network may include the potential objects and their positions and/or velocities for reporting.

There is disclosed herein, in accordance with embodiments of a second aspect of the present disclosure a vehicle. The vehicle comprises: an acquiring unit configured to acquire sensor-based data; a processing unit configured to use the acquired sensor-based data as input to a neural network trained according to a method according to the first aspect of the present disclosure, wherein the trained neural network determines one or more objects that cause a corrective action of an ADAS/AD system of another vehicle; and a communication unit configured to report the determined one or more objects to at least one other vehicle or to a traffic infrastructure or to a cloud server.

According to the vehicle according to the second aspect, the processing unit may be configured to label the determined one or more objects in a traffic scene with a binary information to report the object or to not report the objects.

According to the vehicle according to the second aspect, a number of the extracted one or more objects is less than a number of objects identified in an environment of the vehicle from the sensor-based data.

According to the vehicle according to the second aspect, the trained neural network outputs a plurality of confidence values of identified objects, each of the confidence values indicating a likelihood whether a corresponding identified object causes a corrective action of an ADAS/AD system of another vehicle.

There is disclosed herein, in accordance with embodiments of a third aspect of the present disclosure a cloud server or a traffic infrastructure unit. The cloud server or the traffic infrastructure unit comprises: an acquiring unit configured to acquire sensor-based data; a processing unit configured to use the acquired sensor-based data as input to a neural network trained according to a method according to the first aspect of the present disclosure, wherein the trained neural network determines one or more objects that cause a corrective action of an ADAS/AD system of another vehicle; and a communication unit configured to report the determined one or more objects to at least one other vehicle.

There is disclosed herein, in accordance with embodiments of a fourth aspect of the present disclosure a cloud server or a traffic infrastructure unit configured to implement a computer-implemented method according to the first aspect of the present disclosure.

There is disclosed herein, in accordance with embodiments of a fifth aspect of the present disclosure, a computer program comprising instructions which, when the program is executed by a computer, cause the computer to carry out the method according to the first aspect of the present disclosure.

There is disclosed herein, in accordance with embodiments of a sixth aspect of the present disclosure, a computer-readable storage medium comprising instructions which, when executed by a computer, cause the computer to carry out the method according to the first aspect of the present disclosure.

There is disclosed herein, in accordance with embodiments of a seventh aspect of the present disclosure, a computer program comprising instructions which, when the program is executed by a computer, cause the computer to acquire sensor-based data; to use the acquired sensor-based data as input to a neural network trained according to a method according to the first aspect of the present disclosure, wherein the trained neural network determines one or more objects that cause a corrective action of an ADAS/AD system of another vehicle; and to report the determined one or more objects to at least one other vehicle or to a traffic infrastructure or to a cloud server.

There is disclosed herein, in accordance with embodiments of an eight aspect of the present disclosure, a computer-readable storage medium comprising instructions which, when executed by a computer, cause the computer to acquire sensor-based data; to use the acquired sensor-based data as input to a neural network trained according to a method according to the first aspect of the present disclosure, wherein the trained neural network determines one or more objects that cause a corrective action of an ADAS/AD system of another vehicle; and to report the determined one or more objects to at least one other vehicle or to a traffic infrastructure or to a cloud server.

### Brief Description of Drawings

Embodiments of the disclosure will now be explained in detail, by way of non-limiting example only, with reference to the accompanying figures, described below. Like reference numerals appearing in different ones of the figures can denote identical or functionally similar elements, unless indicated otherwise.
**Figure 1** illustrates a system of vehicles and a cloud server according to an embodiment.
**Figure 2** illustrates a device according to an example embodiment of the present disclosure used for determining or extracting one or more objects.
**Figure 3** illustrates a plurality of detection areas for a vehicle.
**Figure 4** illustrates a programmable signal processing apparatus, which may be configured to implement the functionality of the device of **Figure 2**.
**Figure 5** illustrates a flowchart of a computer-implemented method of training a neural network to select objects in a vicinity of a target vehicle.
**Figure 6** illustrates an exemplary traffic scene for explaining the concept of selecting objects in a vicinity of a target vehicle.
**Figures 7A-7C** illustrate a global map, and corresponding maps as seen by individual vehicles, respectively, for explaining the concept of selecting objects in a vicinity of a target vehicle.
**Figure 8A-8B** illustrate the general concept of the present disclosure in comparison to a conventional system.

### Detailed Description of Embodiments

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

Modern vehicle perception systems are based on two or more sensor types (e.g. radar, cameras and/or lidar) and are able to correctly recognize more than 90% of all objects. This implies that there is no need to share all information between all vehicles. The present disclosure is based on the general concept to provide an object down-selection mechanism for limiting the amount of data to be exchanged, for example, to limit the limit the number of detected objects that need to be communicated to other vehicles. The present object down selection mechanism is readily applicable to vehicles with V2V or other VTX connectivity.

The present disclosure proposes an artificial intelligence (AI) based approach using a trained neural network for object down selection for efficient V2X network usage as well as an approach how to train a neural network in an automatic and systematic way. This allows to efficiently exchange the relevant road or traffic information between vehicles so that the other vehicles are warned about possible dangerous objects and can take an appropriate autonomous action. An advantage of this approach is that a precise message is sent only when it is really needed.

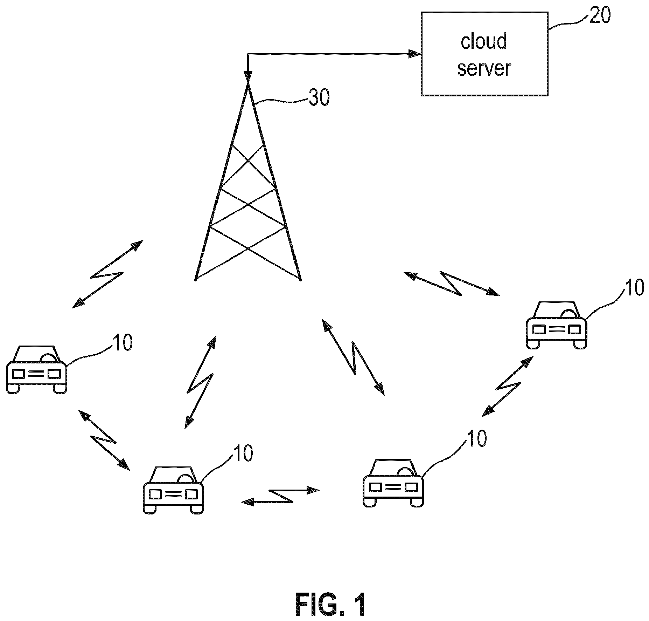

**Figure 1** illustrates a system of vehicles 10 and a cloud server 20 according to an embodiment. The vehicles 10 (e.g. a fleet of ADAS/AD vehicles) are provided with a communication interface to implement a communication connection with the cloud server 20. Such a communication connection may be implemented in different forms; as illustrated in **Figure 1**, a vehicle 10 may have, for example, an over-the-air (OTA) interface (e.g. radio interface according to a wireless communication standard such as LTE, 4G, 5G, 6G) with a base station 30. The base station 30 provides a communication connection (e.g. via a core network, the internet or the like) to the cloud server 20. Based on this communication connection, data related to the individual vehicles 20 may be uploaded to the cloud server 20, and/or may be communicated to the other vehicles 10, for example in the form of a Software-as-a-Service (SaaS). In addition, a direct V2V communication may be implemented, e.g. based on the communication standards mentioned above, or via a V2I communication using, for example, a roadside unit.

The vehicles 10, in particular ADAS/AD vehicles, may be equipped with a wide range of sensor units for environmental perception (e.g., camera and/or and radar and/or LiDAR). These sensors allow the vehicles 10 to perceive its environment and, for example, detect lane markers, traffic signs and other road users including their dynamic properties (location and driving behaviour such as a driving direction, pose, yaw, a velocity or acceleration relative to the ADAS vehicle). This perception software (SW) forms the basis of modern ADAS systems and will be present (in varying degrees of matureness and quality) in every ADAS vehicle. Based thereon, an ADAS/AD vehicle is typically equipped with L2+ capabilities, that is, it can, for example, perform lane keeping and distance keeping.

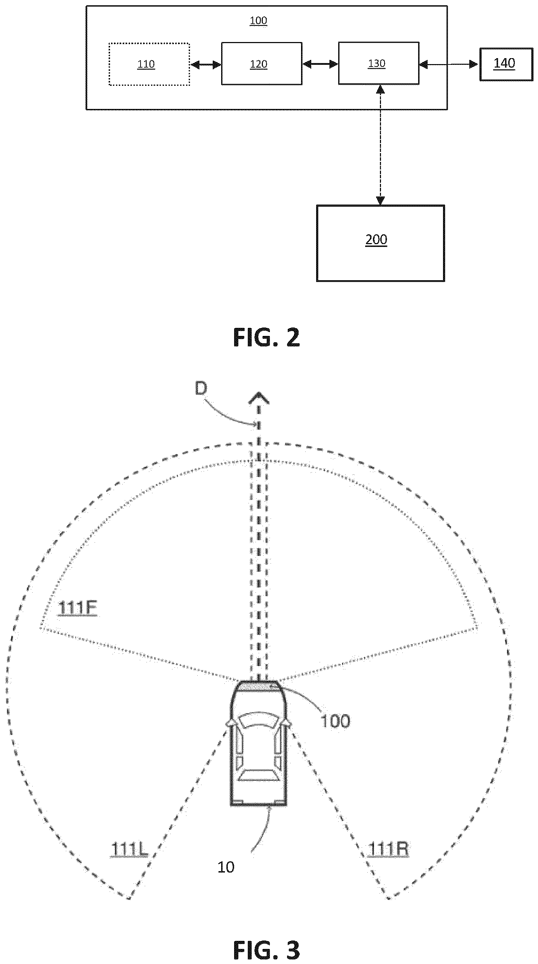

**Figure 2** shows a device 100 according to an example embodiment of the present disclosure used for determining or extracting one or more objects (e.g. other vehicles, bicycles, pedestrians, or the like) that cause a triggering of an action of an ADAS/AD system of another vehicle. The triggered action may be, for example, a triggering of a corrective action of another vehicle, for example activation of a particular ADAS/AD functionality (e.g. autonomous emergency braking, lane keep assists), as will be described in detail below.

The device 100 may be provided in a vehicle 10 and, preferably, may be mounted on the vehicle 10 facing a driving direction D of the vehicle 10. The skilled person understands that it is not required that the device 100 faces the driving direction; the device 100 can also face to a side direction or to a rear direction. The device 100 may be a radar sensor, a radar module, part of a radar system. The device 100 may also be a LiDAR sensor, a LiDAR module, part of a LiDAR system. The device may also be a camera sensor or a camera system. The device 100 may also be a device for the acquisition and processing of a plurality of different sensor data (such as radar data, LiDAR data, camera data). The vehicle 10 may also have more than one of such devices 100.

The device 100 may be provided as part of or, as shown in of **Figure 2****,** interact with a driver assistance system 200 of the vehicle 10. The driver assistance system of the vehicle 200 may include advanced driver-assistance system (ADAS) functionality and/or autonomous driving (AD) functionality, i.e. an ADAS/AD system.

A vehicle 10 may be any land vehicle that is moved by machine power. The figures exemplify this vehicle 10 as a car, with which the device 100 is provided. The present disclosure is, however, not limited thereto. Hence, the device 100 may also be mounted to e.g. a lorry, a truck, a motorbike, a bus, a robot or any other mobile unit.

The device 100 may have a plurality of detection areas, for example be orientated such that it has a forward detection area 111F, a left detection area 111L and/or a right detection area 111R as shown in the plan view of **Figure 3****.** By way of non-limiting example, an object may be considered to be in the surrounding or vicinity of the vehicle 10 at least when it is located within one or more of the plurality of detection areas of the device 100.

As illustrated in **Figure 2****,** the device 100 includes an acquiring unit 120 and a processing unit 130. In addition, the device 100 may optionally include one or more sensors or sensor units (e.g. radar and/or LiDAR and/or camera sensors) 110, but the one or more sensor units 110 may also be provided separate to the device 100. Further, the device 100 may further be connected to a communication unit 140 (e.g. one or more antennae for transmitting and receiving information). Alternatively, the communication unit 140 may also be an integral part of the device 100.

The acquiring unit 120 may be configured (e.g. programmed) to acquire and record sensor-based data of the at least one sensor unit 110 of the vehicle 10, preferably in combination with localization data related to a localization unit (e.g. GPS unit, DPGS unit, not shown) and time data of the vehicle 10. The sensor-based data may be radar data (from a radar sensor) and/or LiDAR data (from a LiDAR sensor) and/or camera data (from a camera system). It is noted that the sensor-based data and the localization data of the vehicle are real world data and not simulated data. Acquiring the sensor-based data from the sensor unit(s) 110 of the vehicle may be performed via an intra-vehicle data communication interface, e.g. based on CAN bus communication or an Ethernet network to a zonal controller or domain controller of the vehicle 10.

The processing unit 130 may be configured (e.g. programmed) to use the acquired sensor-based data (e.g. a list of identified vehicles or objects, and corresponding positions, poses, yaws, velocities and/or accelerations for a plurality of times, sensor-based identified trajectories or trails for the vehicles) as input to a trained neural network. The training of the neural network is described in detail below. The neural network is trained to analyse positions (e.g. based on object detection and identification) and driving behaviours (e.g. based on vehicle trajectory analysis) of a plurality of vehicles in the vicinity or area around a target vehicle, and the neural network determines or extracts one or more objects that may cause a corrective action of an ADAS/AD system of another vehicle.

The communication unit 140 may be configured (e.g. programmed) to report the determined one or more objects to at least one other vehicle or to a traffic infrastructure or to a cloud server. By reporting only those vehicles for which an action of the ADAS/AD system is triggered or will be triggered, for example a corrective action to avoid a collision, only the potentially dangerous objects are extracted and reported to other vehicles. As such, not all sensor-perception based information is shared between all vehicles, thus limiting the number of objects that need to be transmitted.

Here, the processing unit 130 is preferably configured to label the determined one or more objects in a traffic scene with a binary information to report the object or to not report the objects. That is, the binary information can easily be used to determine whether an identified object should be included or disregarded in a reporting message to the other vehicles and/or to the traffic infrastructure and/or the cloud server.

The skilled person understands that a number of the determined (or extracted) one or more objects is less than a number of objects that are actually identified in an environment of the vehicle from the sensor-based data. That is, the neural network actively performs a selection of a subset of objects or vehicles, for example a subset of potentially dangerous vehicles, and only this subset (and corresponding information such as positions, driving direction, pose, yaw, and/or speed data) are included in the reporting message.

The trained neural network may preferably also output a plurality of confidence values of identified objects, each of the confidence values indicating a likelihood whether a corresponding identified object causes a corrective action of an ADAS/AD system of another vehicle. Such confidence values may also be used by the processing unit, or other vehicles (receiving such reporting messages) for appropriate processing. That is, the communication unit 140 may also be configured to report a sub-set of the identified objects having a confidence value larger than a predetermined threshold value.

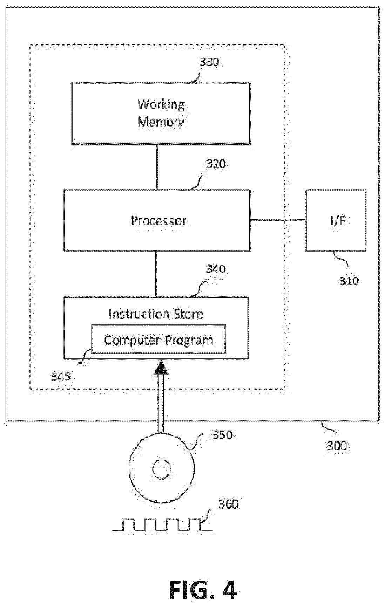

**Figure 4** is a schematic illustration of programmable signal processing apparatus 300, which may be configured to implement the functionality of the device 100 of **Figure 2****.**

The signal processing apparatus 300 has an interface module 310 providing means, e.g. one or more antennae or wired connections, for transmitting and receiving information, e.g. for providing a communication connection to the cloud server 20 and/or other vehicles. The signal processing apparatus 300 also has a processor 320, e.g. a CPU, for controlling the programmable signal processing apparatus 300 to perform the functions of the device 100, a working memory 330, e.g. a random-access memory, and an instruction store 340 storing a computer program 345 having computer-readable instructions which, when executed by the processor 320, cause the processor 320 to perform the functions of the device 100.

The instruction store 340 may include a ROM, e.g. in the form of an electrically-erasable programmable read-only memory (EEPROM) or flash memory, which is pre-loaded with the computer-readable instructions. Alternatively, the instruction store 340 may include a RAM or similar type of memory, and the computer-readable instructions can be input thereto from a computer program product, such as a computer-readable storage medium 350 such as a CD-ROM, etc. or a computer-readable signal 360 carrying the computer-readable instructions.

The device 100 may alternatively be implemented in nonprogrammable hardware, such as an application-specific integrated circuit (ASIC) or in any other suitable manner, using any suitable combination of hardware and software components.

As discussed above, the present disclosure provides various techniques to accurately and reliably extracting and reporting objects which cause triggering of an ADAS/AD system of another vehicle.

The processing apparatus 300 may also be implemented in the cloud server 20 to implement the functionality of the device 100 of **Figure 2****.** In other words, the functionality of the acquiring unit 120, the processing unit 130, and the communication unit 140 can also be implemented in the cloud server 20 or in a traffic infrastructure unit (such as a roadside unit).

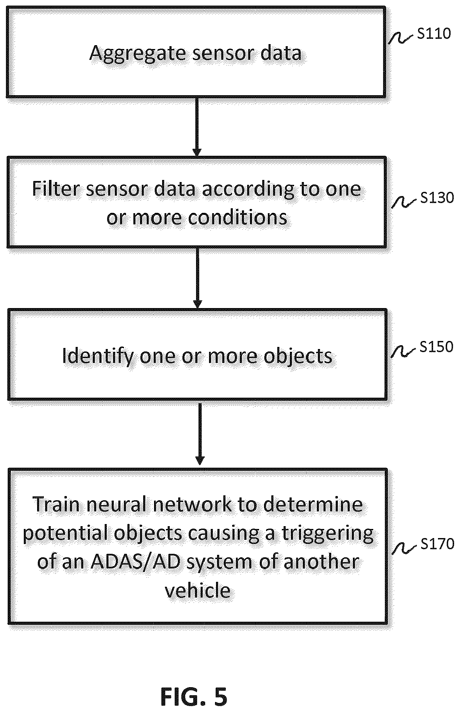

**Figure 5** illustrates a flowchart of a computer-implemented method of training a neural network to select objects in a vicinity of a target vehicle. Here, the selection of objects in a vicinity of a target vehicle is performed to select from a plurality of objects (other vehicles, other road users, pedestrians) in the vicinity of the target vehicle those objects that may cause or activate an action (e.g. a corrective action) of an ADAS/AD system of another vehicle, for example to change the driving direction and/or velocity to avoid a collision.

For this purpose, the neural network may be trained to analyse positions and moving/driving behaviours of a plurality of vehicles in the vicinity of the target or host vehicle.

According to step S110, sensor data related to the plurality of (connected) vehicles are aggregated. Accordingly, a plurality of (connected) vehicles are sensed using one or more of the sensors described above (radar sensor and/or Lidar sensor and/or camera sensor), and the acquired sensor data may be processed and aggregated in in such a way that the respective sensor data from different sensors and for the plurality of vehicles and the target vehicle are synchronized in time and space, i.e. that the detected plurality of vehicles or other objects in the vicinity of the target vehicle are properly associated to one another in geographic position(s) and time in the sense that spatio-temporal relationships between the plurality of vehicles are collected and stored.

As explained, the aggregated sensor data may be from a plurality of vehicles (e.g. a fleet of L2+ and/or L3+ connected vehicles logging data simultaneously) recording sensor data simultaneously. Alternatively, the aggregated sensor data may be from a virtual world simulation of a plurality of vehicles. In other words, the processed data for training the neural network (see below) may be from actual real-world traffic recordings or from simulated traffic recordings.

According to step S130, the sensor data are filtered according to one or more conditions. Here, a condition may be defined to identify an action of an ADAS/AD system of at least one of the vehicle (in the surrounding or vicinity of the target vehicle). Such an action may be an action to change a driving behaviour of a vehicle, such as a slowing down or braking of a vehicle, a change of a steering angle to avoid another vehicle or other obstacle, also a sudden acceleration of a vehicle or the like. Such a condition may thus be defined to identify a corrective action of an ADAS/AD system of at least one other vehicle in the surrounding or vicinity of the target vehicle.

According to step S150, one of more objects or road users, which may be one or more of the plurality of vehicles, but may also be other road users such as bicycles, pedestrians or the like, are identified based on the filtered sensor data. In other words, objects that cause a corrective action of the ADAS/AD system in at least one vehicle as well as the vehicles with the ADAS/AD system performing the corrective action are identified. Here, the identification may include acquiring a plurality of positions of the identified objects as well as the driving or moving behaviour of the identified objects. A driving or moving behaviour may include, for example, a plurality of positions and/or poses and/or yaws and/or velocities and/or accelerations (vectors) based on which the driving and moving behaviour can analysed over time.

As the condition(s) filter out only those vehicles in a traffic scene which are involved in an action, such as a corrective action, of the ADAS/AD system of at least one vehicle, only a sub-set of vehicles in the traffic scene can be identified, and may be communicated or reported to the vehicles in the traffic scene.

According to step S170, the identified one or more objects are input into a neural network and thereby used to train the neural network to determine potential or candidate objects (in a vicinity of a vehicle) that cause a triggering of an ADAS/AD system of another vehicle. This input may include inputting the set of positions of the identified objects as well as the plurality of velocities and/or accelerations (vectors). The neural network is thus trained to analyse a position and moving behaviour of a plurality of vehicles in a vicinity of the target vehicle.

In general, neural networks have emerged in the past years as a state-of-the-art tool in many vehicular applications.

Especially in computer vision the state-of-the-art object detectors are based on neural networks, in particular deep neural networks and convolutional neural networks. In order to transfer their benefits in these domains to sensor processing and object detection for autonomous driving and the like components are required which can be seamlessly plugged into a neural network system. The advantage of (supervised) neural networks is that they are capable of learning a mapping *f*(*x, θ*) = *y* with inputs *x,* outputs *y* and learnable parameters *θ* based on data and not based on a fully designed model. Given that, (supervised) neural networks can define mappings on an abstract, multidimensional way. The neural network components proposed here are capable of being trained (i.e. a training that optimizes network weights by considering inputs and outputs directly), i.e. learning the model dynamics implicitly and directly from the input data.

To be easily pluggable into a neural network and trainable with gradient descent, the proposed algorithms (embodiments) preferably fulfil the following properties: (1) Its output (objects that cause an action of an ADAS/AD system of another vehicle) is differentiable with respect to the input data (identified objects and their positions and driving behaviour over a plurality of timesteps, based on filtered sensor data) and with respect to all learnable parameters; (2) The gradients should not be zero almost everywhere. This may be achieved by applying the chain rule on differentiable subfunctions (such as calculating a sum, a difference, or the like) and by avoiding hard YES/NO assignments which are typically not differentiable.

This is important to ensure that learnable components can be trained with gradient descent and therefore be adapted by the optimization algorithm. This is an advantage over methods in the prior art which are either not differentiable or are containing hard assignments which have no non-zero gradients. Additionally, the embodiments described here can contain learnable parameters themselves. Therefore, they can partially or completely be adapted by a data driven optimization algorithm which enables them to learn more abstract mappings.

A preferred embodiment of the neural network may be a recurrent neural network (RNN) to realize the assignment and information gathering over multiple timesteps (over multiple frames), in particular the identification or assignment of data values in multiple timesteps at different grid (e.g. related to position, speed) positions. RNNs, as such, are known to be able to gather information in a neural network over multiple timesteps in a sequence, for example using Long Short-Term Memories, LSTMs, having internal memory states (see e.g. Hochreiter et al.: "Long short-term memory", Neural computation, 9(8), 1735-1780, 1997).

Referring back to the identifying step, the identification of the one ore more objects may advantageously be performed by tracking the one or more objects for a plurality of times, for example for a plurality of frames. A frame may be considered as a collection of sensor data for a particular time step, so that a plurality of frames represents the collection of sensor data for a plurality of time steps. For example, the collection of radar data (e.g. representing range data and Doppler data, in a spatial dimension of ± 80m and having a specific spatial resolution) for a specific time step, may be considered as a radar data frame.

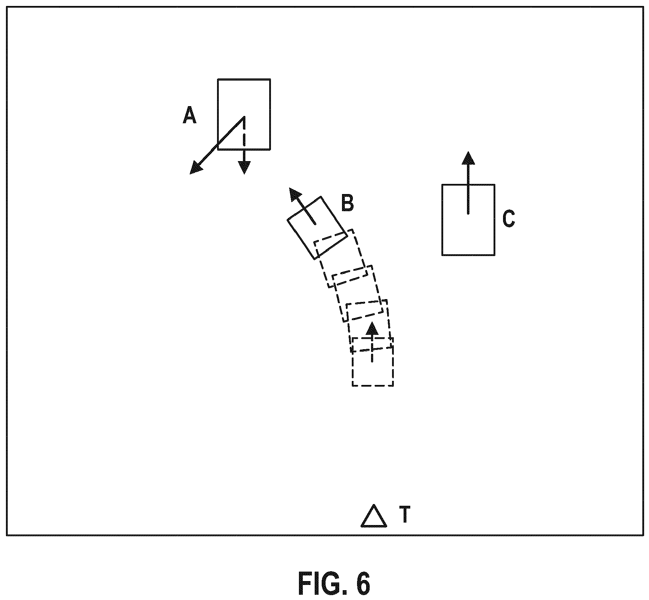

**Figure 6** shows an example for illustrating this concept. A target or host vehicle (represented by Δ) has aggregated sensor data with regard to vehicles A, B, and C (represented by solid boxes) in the vicinity (defined, for example, by the detection range of the sensor, e.g. ± 80m for a radar sensor). As shown, the ADAS/AD system of vehicle A performs a corrective action to avoid a collision with vehicle B. Vehicle B is illustrated not only for the current time point (as a solid box) but also for four different previous time points (as dashed boxes) to schematically illustrate the driving behaviour of vehicle B that led to a potential dangerous situation.

The corrective ADAS/AD action for vehicle A is illustrated as a change from an intended speed vector (dashed arrow) to a correction speed vector (solid arrow). The skilled person understands that the correction speed vector is pointed in a direction different from the intended speed vector to avoid a collision with vehicle B, and that the correction speed is larger than th intended speed to avoid the collision. Moreover, an action of the ADAS/AD system of vehicle B can also be identified, notably already earlier in time due to the difference in direction (difference of direction for the dashed bounding boxes for vehicle B). By contrast, no corrective action can be identified for vehicle C. The skilled person understands that detecting the earlier action of the ADAS/AD system of vehicle B to change the driving direction (potentially to overtake vehicle C) may advantageously be communicated or reported to vehicle A in order to better avoid a dangerous situation.

In a preferred embodiment, the identified one or more objects are traced back to previous sensor readings to track the one or more objects over a plurality of time steps. For example, in **Figure 6**, the vehicle B is traced back to previous sensor readings to identify a trail (defined by positions, and preferably also be velocities and/or accelerations) of the vehicle B over time. Tracing back the one or more objects over a plurality of time steps may be performed for a limited amount of time, for example 5 seconds.

Here, in general, the algorithm may thus identify objects that may "cause trouble" which here may be defined as objects that force a corrective action of ADAS/AD systems. This may be done by marking these objects on a given frame and casting this information back to previous sensor readings (e.g. minus 5 seconds - for this, known object tracking algorithms can be used). This allows to label all objects on a scene with a binary information (report/broadcast or down select), and thus filtered results may be used to train the AI based object down-selection neural network.

A condition that identifies an action of an ADAS/AD system of vehicle B in **Figure 6** is the detection that vehicle B rapidly (i.e. within a predetermined amount of time) changes a driving direction or changes a driving direction toward a region for which opposing traffic can be expected.

Also, a condition that identifies an action of an ADAS/AD system of vehicle A in **Figure 6** is the detection that vehicle A performs a corrective action to avoid a collision.

The above example are non-limiting examples of conditions identifying an action of an ADAS/AD system of at least one of the plurality of vehicles. Additional preferred examples of conditions may be one or more of:
- a detection of a vehicle swarm anomaly;
- a detection of a discrepancy with a traffic prediction;
- a detection that a vehicle control unit (such as related to autonomous emergency braking (AEB), lane keep assists (LKA)) rises a flag;
- a detection that a path planning algorithm needs to correct its course due to an object that was not earlier seen by the perception system of the vehicle;
- a detection that the ADAS/AD system of the vehicle disengages and asks the driver for intervention;
- a detection of a rapid (i.e. by a predetermined amount within a specific amount of time) change of direction of a detected object;
- a detection of a collision or detection that a corrective action is performed to avoid a collision;
- a detection that a high-risk participant is identified.

In this context, a swarm of vehicles may be considered as a plurality of vehicles moving seemingly together in a synchronized way, for example, by keeping, on a statistical average, for example, a vehicle-to-vehicle distance over time. One example of such a swarm of vehicles is a platoon of vehicles, i.e. a plurality of vehicles aligned one after another and keeping an average distance over time. A vehicle swarm anomaly may be considered as a situation in which at least one of the vehicles starts to deviate from the established vehicle-to-vehicle distance or from the average vehicle velocity of the swarm. Detecting such a vehicle swarm anomaly may indicate a potential situation that can lead to other vehicles having to also perform a corrective motion, e.g. already for moving to fill the gap that is opened when a vehicle leaves the swarm.

Further, a traffic prediction may be made on the basis of a traffic prediction model, for example a Lattice Boltzmann Method (LBM) based traffic modelling. Traffic modelling, as such, is known (e.g. Noël et al., "Lattice Boltzmann Method for Heterogeneous Multi-Class Traffic Flow", Journal of Computational and Theoretical Transport, Vol. 50, 2021, pages 27-51), and the skilled person understands that a discrepancy from such a traffic prediction, for example, a discrepancy in vehicular position by a predetermined amount, a discrepancy in vehicular velocity by a predetermined amount, or the like, may be used as an indication that an action of an ADAS/AD system of a vehicle has been or will be made.

Here, a collision may be identified more easily in a virtual simulation, while a corrective action performed to avoid a collision may readily occur and thus be identified for a fleet of connected vehicles logging data simultaneously.

Further, high-risk participant may be scooters, motorcycles, bicycles, vehicles with a trailer, emergency vehicles with traffic lights, and the like, that is traffic participants that are associated with a higher risk of injury in case of accident or collision with another object.

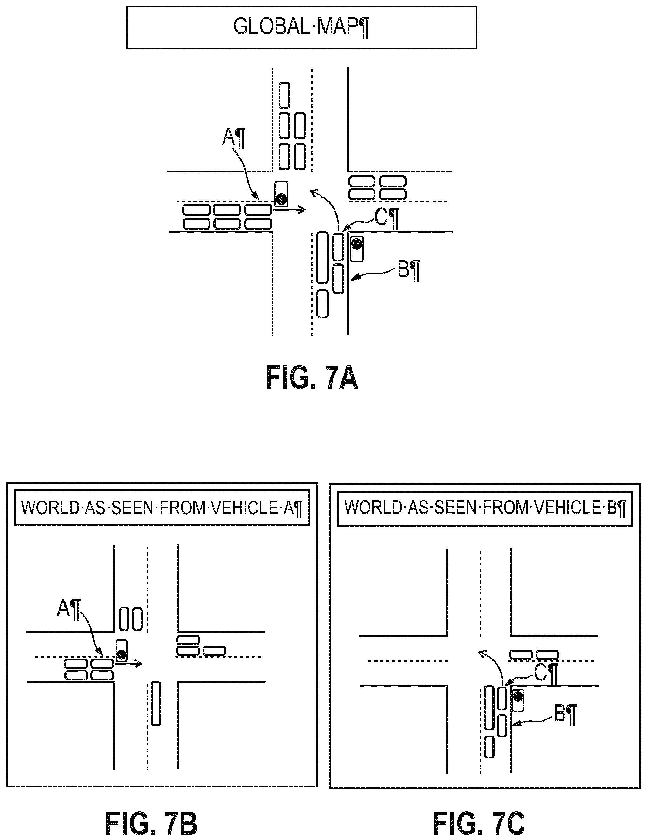

The above concept(s) are further illustrated in **Figures 7A** - **7C.** **Figure 7A** illustrates a whole situation map (a global map), and shows that despite the red light vehicle C is entering the road crossing which is a possible dangerous situation. **Figure 7B** shows the objects detected by vehicle A ("World as seen from vehicle A") and the skilled person understands that not all vehicles are detected due, for example, to occlusions et. Here, especially vehicle C is not seen due to large truck/bus occluding it. On the second map presented in **Figure 7C** ("World as seen from vehicle B") it can be noticed that the number of vehicles detected by vehicle B is also limited due to the sensor line of sight. It can be noticed as well that some of the objects detected by both A and B are overlapping. On the other hand, vehicle B should detect the dangerous action taken by vehicle C and therefore should inform other vehicles on the road crossing about it. Using the above trained neural network, vehicle B can determine vehicle C as an object that may cause a triggering of an ADAS/AD system of another vehicle (e.g. vehicle A) and will appropriately report (only) this object to other vehicles by direct V2V communication or via the traffic infrastructure (V2X).

The output of the trained neural network includes the determined potential objects and their positions and/or velocities and/or accelerations for reporting to other vehicles. The skilled person understands that this allows to down select, from a plurality of objects in the area of a target vehicle, only those objects that may have an effect on the ADAS/AD system of another vehicle. This approach thus limits the amount of traffic information that should be exchanged between vehicles (V2V) and/or between vehicles and infrastructure (V2X) and thus provides a more efficient network usage. Moreover, as only the relevant objects are reported using this approach, the bandwidth savings may advantageously used to provide a more precise information (plurality of positions and/or velocities and/or accelerations) regarding the relevant objects so that the reporting message can be a more precise message and thus better supports the other vehicles in identifying the reported relevant objects.

The present disclosure thus teaches using an AI-based algorithm for analysing the positions (e.g. by object detection) and behaviours (e.g. by vehicles trajectory analysis) of all detections around the vehicle with an ADAS/AD perception system in order to extract those objects that can be potentially dangerous to the other vehicles. This advantageously allows to limit the number of objects that needs to be broadcasted to the other vehicles.

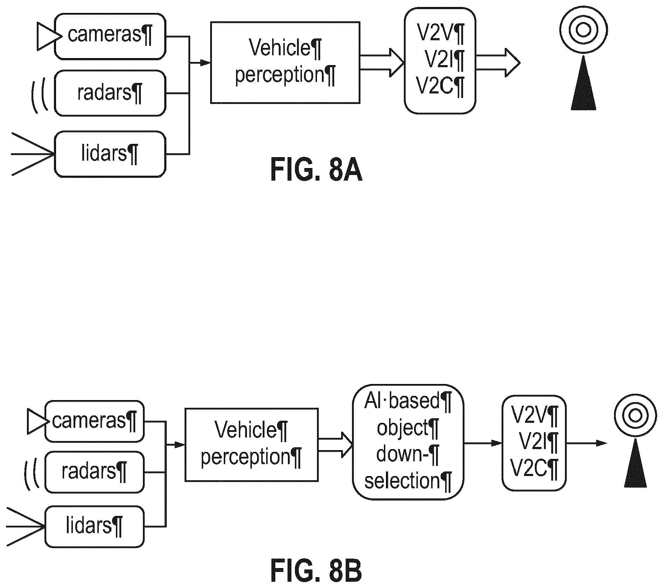

The general concept of the present disclosure is further illustrated in **Figure 8B** in comparison to a conventional system illustrated in **Figure 8A****.** That is, while a plurality of sensor systems (e.g. cameras, radars, lidars, or any combination thereof) may be used for a vehicle perception of other vehicles or objects in the sensing region of the vehicle and are thus reported by any of V2V, V2I, V2C communication, thus leading to ever more data being communicated as shown in **Figure 8A****,** the ever more data are not all relevant data (thus creating unnecessary communication bandwidth, and also unnecessary processing load for other vehicles and/or traffic infrastructure for disregarding data). As explained, this disadvantage of conventional system can be successfully addressed by the present disclosure to use a trained neural network to perform an object down-selection for reporting only those objects that are potentially dangerous.

The skilled person understands that the use of neural networks may require to prepare an extensive training and validation datasets that can be used to prepare the algorithms. Today in most cases they are prepared by tedious manual annotation of data performed by humans. In case of training the down-selection algorithms explained above it would be extremally hard to perform a human annotation (as there are typically a lot of objects to analyze in a given frame together with several seconds of their behavior history etc.). By contrast, the above embodiment provides a robust mechanism to train a neural network in a way that avoids human annotation and the like, and thus provides an automated approach that can be used to prepare an appropriate relevant dataset.

According to another preferred embodiment, the trained neural network may be a neural network which is trained for a specific traffic scene, such as a roundabout, multi-lane traffic roads, traffic areas having a statistical increased likelihood of traffic accidents or the like. That is, the neural network may be trained for a specific traffic infrastructure, such as a road-side unit, positioned at such a specific traffic scene and implementing V2I communications with vehicles in the local geographic area of the infrastructure.

According to another embodiment, also a cloud server or a traffic infrastructure unit (such as a roadside unit) may be configured, as generally explained in **Figure 4**, to acquire, via an air interface, sensor-based data from a plurality of vehicles. These sensor-based data are preferably aggregated to provide synchronized sensor-based data between the different vehicles. A processing unit of the cloud server or a traffic infrastructure unit may use the acquired sensor-based data as input to a trained neural network as explained above. Also, in this embodiment, the trained neural network determines one or more objects that cause a corrective action of an ADAS/AD system of another vehicle, and a communication unit reports the determined one or more objects to at least one other vehicle.

According to another embodiment, the communication unit of the cloud server or the traffic infrastructure unit may also receive a reporting message of thus determined or extracted one or more objects from a first vehicle and transmits the reporting message to a second vehicle.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the embodiments presented herein in any way. It is also to be understood that any procedures recited in the claims need not be performed in the order presented.

While this specification contains many specific embodiment details, these should not be construed as limitations on the scope of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

## Claims

1. A computer-implemented method of training a neural network to select objects in a vicinity of a target vehicle, comprising:
- aggregating (S110) sensor data related to the plurality of vehicles;
- filtering (S130) the sensor data according to one or more conditions, said conditions identifying an action of an ADAS/AD system of at least one of the plurality of vehicles;
- identifying (S150) one or more objects in the vicinity of target vehicle based on the filtered sensor data; and
- using (S170) the identified one or more objects to train the neural network to determine potential objects that cause a triggering of an ADAS/AD system of another vehicle.

2. The method of claim 1, wherein:
the identifying (S150) includes an identification of a plurality of positions of the one or more objects.

3. The method of one of claims 1 - 2, wherein:
the identifying (S150) includes an identification of a plurality of velocities and/or accelerations of the one or more objects.

4. The method of claim 3, wherein the plurality of positions and/or the plurality of velocities and/or accelerations are used to train the neural network.

5. The method of one of claims 1 - 4, further comprising:
- tracing the identified one or more objects back to previous sensor readings to track the one or more objects over a plurality of time steps.

6. The method of one of claims 1 - 5, wherein the one or more conditions identifying an action is one or more of:
- detection of a vehicle swarm anomaly;
- detection of a discrepancy with a traffic prediction;
- detection that a vehicle control unit rises a flag;
- detection that a path planning algorithm needs to correct its course due to an object that was not earlier seen by the perception system of the vehicle;
- detection that the ADAS/AD system of the vehicle disengages and asks the driver for intervention;
- detection of a rapid change of direction of a detected object;
- detection of a collision or detection that a corrective action is performed to avoid a collision;
- detection that a high-risk participant is identified.

7. The method of one of claims 1 - 6, wherein the aggregated sensor data are synchronized sensor data.

8. The method of one of claims 1 - 7, wherein the aggregated sensor data are from a plurality of vehicles recording sensor data simultaneously or are from a virtual world simulation of a plurality of vehicles.

9. The method of one of claims 1 - 8, wherein the trained neural network is a neural network trained for a specific traffic scene.

10. The method of one of claims 1 - 9, wherein the output of the trained neural network includes the potential objects and their positions and/or velocities for reporting.

11. A vehicle, comprising:
an acquiring unit (120) configured to acquire sensor-based data;
a processing unit (130) configured to use the acquired sensor-based data as input to a neural network trained according to a method of one of claims 1 - 10, the trained neural network for determining one or more objects that cause a corrective action of an ADAS/AD system of another vehicle;
a communication unit (140) configured to report the determined one or more objects to at least one other vehicle or to a traffic infrastructure or to a cloud server.

12. The vehicle of claim 11, wherein
the processing unit (130) is configured to label the determined one or more objects in a traffic scene with a binary information to report the object or to not report the objects.

13. The vehicle of one of claims 11 - 12, wherein a number of the extracted one or more objects is less than a number of objects identified in an environment of the vehicle from the sensor-based data.

14. The vehicle of one of claims 11 - 13, wherein the trained neural network outputs a plurality of confidence values of identified objects, each of the confidence values indicating a likelihood whether a corresponding identified object causes a corrective action of an ADAS/AD system of another vehicle.

15. A cloud server or a traffic infrastructure unit, configured to implement a computer-implemented method according to one of claims 1 - 10.
